# EUROPÄISCHE PATENTSCHRIFT

(11) **EP 2 222 180 B1**
(45) Veröffentlichungstag und Bekanntmachung des Hinweises auf die Patenterteilung: **18.07.2018**
(21) Anmeldenummer: 08851472.4
(22) Anmeldetag: 21.11.2008
(51) Int. Cl.: A23K 20/179, A23K 50/80

(54) **VERFAHREN ZUR HERSTELLUNG VON CAROTINOID-LÖSUNGEN**
METHOD FOR THE PRODUCTION OF CAROTENOID SOLUTIONS
PROCÉDÉ DE PRODUCTION DE SOLUTIONS À BASE DE CAROTÉNOÏDES

(30) Priorität: 23.11.2007 EP 07121461
(43) Veröffentlichungstag der Anmeldung: 01.09.2010
(73) Patentinhaber: BASF SE, 67056 Ludwigshafen am Rhein (DE)
(72) Erfinder: BRANDS, Mario, 67063 Ludwigshafen (DE); END, Lutz, 68526 Ladenburg (DE); KELLER, Andreas, 67346 Speyer (DE); ENGEL, Robert, 67346 Speyer (DE); FEUERSTEIN, Dieter, 67373 Dudenhofen (DE); FELDTHUSEN JENSEN, Jesper, 55268 Nieder-Olm (DE)
(86) Internationale Anmeldenummer: PCT/EP2008/065991
(87) Internationale Veröffentlichungsnummer: WO 2009/065929

(56) Entgegenhaltungen:
- WO-A-96/23420
- WO-A-2006/125591
- US-A- 2 861 891
- US-A- 5 364 563

## Beschreibung

Die vorliegende Erfindung betrifft ein Verfahren zur Herstellung von Carotinoid-Lösungen in einem für Nahrungsmittel geeigneten Öl. Insbesondere betrifft die Erfindung ein Verfahren zum Auflösen eines Carotinoids, insbesondere Astaxanthin, in einem für Nahrungsmittel geeigneten Öl durch Erhitzen einer Suspension des Carotinoids, speziell des Astaxanthins, in dem Öl und anschließendes Abschrecken (Quenchen) der erhaltenen Lösung.

Carotinoide werden in großem Umfang zu pharmazeutischen oder kosmetischen Zwecken sowie in der Nahrungsmittelindustrie eingesetzt. In der Nahrungsmittelindustrie werden Carotinoide als farbgebende Additive und essentielle Nahrungsergänzungsmittel verwendet. Ein wesentliches Problem bei der Verabreichung von Carotinoiden ist deren geringe Wasserlöslichkeit und die damit einhergehende schlechte Bioverfügbarkeit. Dieses Problem ist besonders bei Astaxanthin ausgeprägt. Aus diesem Grund können Carotinoide und insbesondere Astaxanthin und seine Derivate nicht als solche eingesetzt werden, sondern müssen in eine Formulierung überführt werden, die eine hinreichende Bioverfügbarkeit dieser Substanzen gewährleistet. Aufgrund der chemischen Instabilität von Carotinoiden - die Verbindungen sind oxidationslabil und neigen zudem zur Bildung von inaktiven Konfigurationsisomeren durch cis-trans-Isomerisierung der exocyclischen Doppelbindungen - stellt die Formulierung dieser Verbindungen eine besondere Herausforderung dar. Hierbei sind flüssige Formulierungen der Carotinoide, speziell des Astaxanthins, in essbaren, d. h. für Nahrungsmittel geeigneten Ölen, von besonderem Interesse.

Die WO2006/125591 beschreibt die Herstellung von Carotinoid-Lösungen in für Nahrungsmittel geeigneten Ölen, bei dem man zunächst eine Suspension des Carotinoids in der Ölphase bereitstellt, die Suspension für eine kurze Zeit durch kontinuierliches Vermischen mit einem heißen Öl erhitzt, um das Carotinoid in Lösung zu bringen, und die so erhaltene heiße Carotinoid-Lösung abschreckt, indem man sie mit einem kalten, für Nahrungsmittel geeigneten Öl kontinuierlich vermischt. Dieses Verfahren ist mit einer Reihe von Nachteilen verbunden. Zum einen führt das Abschrecken mit dem kalten Öl zu einer starken Verdünnung der erhaltenen Carotinoid-Lösung, so dass man in der heißen Carotinoid-Lösung eine vergleichsweise hohe Carotinoid-Konzentration einstellen muss. Aufgrund der schlechten Löslichkeit und der geringen Lösungsgeschwindigkeit von Carotinoiden in solchen Ölen müssen vergleichsweise hohe Temperaturen angewendet werden und/oder die Teilchengrößen des Carotinoids in der Suspension müssen sehr gering sein. So sind in der Regel bei Astaxanthin Temperaturen oberhalb 150 °C erforderlich, um bei vertretbaren Partikelgrößen (D_{4.3} > 2 µm) eine Konzentration von 1500 ppm in der heißen Lösung zu erreichen. Bei diesen Temperaturen tritt jedoch bereits ein merklicher Abbau des Astaxanthins durch Bildung der unerwünschten cis-Isomeren auf. Zudem besteht bei nicht-raffinierten Ölen die Gefahr, dass sich in den Apparaturen Ablagerungen durch Zersetzungsreaktionen im Öl bilden.

Der vorliegenden Erfindung liegt somit die Aufgabe zu Grunde, ein effizienteres Verfahren zur Herstellung von Carotinoid-Lösungen in für Nahrungsmittel geeigneten Ölen bereitzustellen, das insbesondere die Nachteile des Standes der Technik behebt. Diese Aufgabe wird durch das im Folgenden beschriebene Verfahren gelöst.

Die Erfindung betrifft somit ein Verfahren zur Herstellung von Carotinoid-Lösungen in einem für Nahrungsmittel geeigneten Öl, umfassend:
i. Bereitstellung einer Suspension des Carotinoids in dem Öl,
ii. kontinuierliches Erhitzen eines Stroms der Suspension in einem für Nahrungsmittel geeigneten Öl, wobei man eine heiße Carotinoid-Lösung erhält, und
iii. Abschrecken der heißen Carotinoid-Lösung, umfassend das Vermischen der heißen Carotinoid-Lösung mit einer kühleren Lösung des Carotinoids in dem für Nahrungsmittel geeigneten Öl in einer Mischpumpe,
wobei man die kühlere Lösung des Carotinoids erhält, indem man wenigstens einen Teilstrom der in Schritt iii. erhaltenen Carotinoid-Lösung in ein für Nahrungsmittel geeignetes Öl oder in eine Lösung des Carotinoids in einem für Nahrungsmittel geeigneten Öl zurückführt.

Das erfindungsgemäße Verfahren ist mit einer Reihe von Vorteilen verbunden. Die Verwendung von Mischpumpen führt zu einer besonders raschen Abkühlung der heißen Carotinoid-Lösung. Auf diese Weise wird die Zersetzung und Isomerisierung des Carotinoids deutlich vermindert oder sogar vermieden. Zudem wird ein Auskristallisieren des Carotinoids weitgehend oder vollständig vermieden. Hierbei ist zu beachten, dass bereits geringe Mengen an nicht gelöstem Carotinoid in der Produktlösung stören und sich auch nur äußerst langsam, wenn überhaupt, wieder lösen. Zudem wird durch das rasche Abkühlen effizient die Zersetzung oder Isomerisierung des Carotinoids verringert.

Das erfindungsgemäße Verfahren wird nunmehr im Folgenden ausführlich erläutert. Bevorzugte Ausführungsformen des erfindungsgemäßen Verfahrens sind im Folgenden und in den Unteransprüchen angegeben.

Unter einem für Nahrungsmittel geeigneten Öl versteht man im Sinne der Erfindung ein für die Tier- und/oder Humanernährung zugelassenes Öl. Dieses Öl wird im Folgenden auch als essbares Öl bezeichnet. Das essbare Öl kann synthetischer, mineralischer, pflanzlicher oder tierischer Herkunft sein. Beispiele sind Pflanzenöle wie Sojabohnenöl, Palmöl, Palmkernöl, Sonnenblumenöl, Maiskeimöl, Leinsamenöl, Baumwollsaatöl, Tocopherole, Rapsöl, Distelöl, Weizenkeimöl, Reisöl, Kokosöl, Mandelöl, Aprikosenkernöl, Avocadoöl, Jojobaöl, Haselnussöl, Walnussöl, Erdnussöl, Pistazienöl, Triglyceride mittelkettiger (= C₈-C₁₀) Fettsäuren pflanzlichen Ursprungs (sog. MCT-Öle) und PUFA-Öle (PUFA = mehrfach ungesättigte Fettsäuren (polyunsaturated fatty acids) wie Eikosapentaensäure (EPA), Docosahexaensäure (DHA) und α-Linolensäure), weiterhin semisynthetische Triglyceride, z.B. Caprylsäure/Caprinsäure-Triglyceride wie die Miglyol-Typen, weiterhin Oleostearin, Paraffinöl, Glycerylstearat, Isopropylmyristat, Diisopropyladipat, 2-Ethylhexansäureacetylstearylester, flüssige hydrierte Polyisobutene, Squalan, Squalen, weiterhin tierische Öle und Fette wie Schmalz, Talg, Fischöle einschließlich Makrelen-, Sprotten-, Thunfisch-, Heilbutt-, Kabeljau- und Lachsöl sowie kommerzielle Fischölblends wie Südamerikanisches Fischöl, Skandinavisches Fischöl und Menhaden Fischöl, sowie weiterhin Lanolin. Geeignet sind selbstredend auch Mischungen dieser Öle.

Bevorzugt sind insbesondere Pflanzenöle wie Sojabohnen-Öl, Palmöl, Palmkernöl, Sonnenblumenöl, Distelöl, Maiskeimöl, Olivenöl, Leinsamenöl, Rapsöl, Reisöl, Kokosöl, Erdnussöl, PUFA-Öle, MCT-Öle, weiterhin Fischöle, Fischölblends sowie Mischungen dieser Öle, insbesondere Maisöl, Sonnenblumenöl, Sojabohnenöl, Fischöl, Palmkernöl und MCT-Öle.

In einer besonders bevorzugten Ausführungsform der Erfindung umfasst das zur Herstellung der heißen Carotinoid-Lösungen und Carotinoid-Suspensionen verwendete Öl zu wenigstens 50 Gew.-%, insbesondere zu wenigstens 80 Gew.-%, bezogen auf die Gesamtmenge der in den Schritten i. und ii. eingesetzten Öle, wenigstens ein Öl mit einem hohen Anteil, d.h. wenigstens 60 Gew.-% an C₈- bis C₁₄-Fettsäuren, insbesondere C₈- bis C₁₀-Fettsäuren, insbesondere wenigstens ein unter Palmkernöl und MCT-Ölen ausgewähltes essbares Öl.

Bei den verwendeten Ölen kann es sich um Raffinatöle oder Rohöle handeln, die noch ursprungsspezifische Verunreinigungen wie Proteine, Phosphat, (Erd-)Alkalimetallsalze und dergleichen in üblichen Mengen enthalten. Die im erfindungsgemäßen Verfahren eingesetzten Öle können auch geringe Mengen an Wasser, vorzugsweise jedoch nicht mehr als 10 Gew.-%, z.B. 0,1 bis 10 Gew.-%, häufig 0,5 bis 8 Gew.-%, bezogen auf das Öl, enthalten. In einer speziellen Ausführungsform der Erfindung enthält das essbare Öl nicht mehr als 0,5 Gew.-%, bezogen auf die Gesamtmenge des eingesetzten essbaren Öls, an Wasser.

Erfindungsgemäß geeignete Carotinoide sind alle bekannten, aus natürlichen Quellen oder synthetisch zugänglichen Carotinoide und Carotinoid-Derivate. Beispiele hierfür sind Carotene wie β-Carotin und Lycopin, sowie Xanthophylle wie Lutein, Astaxanthin, Adonirubin, Adonixanthin, Zeaxanthin, Cryptoxanthin, Citranaxanthin, Canthaxanthin, Echinenon, Bixin, β-Apo-4-carotinal, β-Apo-8-carotinal, β-Apo-4-carotinsäureester, einzeln oder als Mischung. Die erfindungsgemäßen Vorteile kommen insbesondere bei Xanthophyllen und speziell bei Astaxanthin und Canthaxanthin zum Tragen und insbesondere bei Astaxanthin. Dementsprechend betrifft eine besonders bevorzugte Ausführungsform der Erfindung ein Verfahren, bei dem als Carotinoid Astaxanthin verwendet wird.

Sofern es sich bei dem Carotinoid um Astaxanthin handelt, wird dieses in Schritt i. üblicherweise in einer Reinheit, bezogen auf das all-trans-Isomer von wenigstens 70 Gew.-%, häufig wenigstens 80 Gew.-%, vorzugsweise wenigstens 90 Gew.-% und insbesondere wenigstens 95 Gew.-% eingesetzt. Neben dem all-trans-Isomeren kann das Astaxanthin auch Anteile an cis-Isomeren des Astaxanthins sowie von Astaxanthin verschiedene Carotinoide enthalten. Der Anteil an von Astaxanthin verschiedenen Carotinoiden wird in der Regel 30 Gew.-%, häufig 20 Gew.-%, insbesondere 10 Gew.-% und besonders bevorzugt 5 Gew.-%, bezogen auf die Gesamtmenge des eingesetzten Carotinoids nicht überschreiten.

Insbesondere verwendet man Astaxanthin, das die an ein für Nahrungsmittel zugelassenes Astaxanthin gestellten Anforderungen erfüllt, d. h. das weniger als 4 Gew.-% Carotinoide, die von Astaxanthin verschieden sind, enthält, und dass einen Schwermetallgehalt von höchstens 10 ppm aufweist und das zu wenigstens 70 Gew.-%, häufig wenigstens 80 Gew.-%, vorzugsweise wenigstens 90 Gew.-% aus dem all-trans-Isomeren besteht.

Die Bereitstellung einer Suspension des Carotinoids in dem für Nahrungsmittel geeigneten Öl erfolgt nach üblichen Verfahren zur Bereitstellung solcher Suspensionen, wie sie im Stand der Technik beschrieben sind. Hierzu kommen grundsätzlich Verfahren in Betracht, bei denen ein durch Fällung oder in sonstiger Weise hergestelltes Pulver des Carotinoids in Öl suspendiert wird, sowie Verfahren, bei denen ein festes Carotinoid in dem Öl durch Vermahlen auf die gewünschte Teilchengröße gebracht wird.

Die Carotinoid-Suspension kann kontinuierlich oder diskontinuierlich hergestellt werden.

Insbesondere erfolgt die Bereitstellung der Carotinoid-Suspension in Schritt i. des erfindungsgemäßen Verfahrens durch Vermahlen des Carotinoids, welches vorzugsweise die oben genannte Reinheit aufweist, insbesondere von Astaxanthin, in dem für Nahrungsmittel geeigneten Öl. Hierzu wird man in der Regel das Carotinoid zunächst in dem Öl suspendieren, wobei man eine grobteilige Carotinoid-Suspension erhält, und anschließend die Carotinoid-Partikel in einer geeignete Vorrichtung zum Vermahlen auf die gewünschte Teilchengröße zerkleinern. Als Vorrichtungen zum Vermahlen können übliche, dem Fachmann bekannte Vorrichtungen, beispielsweise Kugelmühlen, Perlmühlen oder Kolloidmühlen, eingesetzt werden.

Das Vermahlen wird in der Regel so durchgeführt, dass die Partikel des Carotinoids in der Suspension einen volumenmittleren Teilchendurchmesser im Bereich von 0,5 bis 50 µm, insbesondere im Bereich von 0,6 bis 30 µm und speziell im Bereich von 0,7 bis 20 µm aufweisen. Ganz speziell liegt der volumenmittlere Teilchendurchmesser im Bereich von 0,8 bis 15 µm. Unter dem volumenmittleren Teilchendurchmesser versteht man den mittels Fraunhofer-Beugung an einer verdünnten 0,01 bis 0,1 Gew.-%igen Suspension des Carotinoids in dem essbaren Öl bestimmten volumenmittleren Teilchendurchmesser (D_{4,3}-Wert).

Das Vermahlen erfolgt typischerweise bei Temperaturen unterhalb 100 °C, häufig im Bereich von 20 bis 90 °C und insbesondere im Bereich von 30 bis 70 °C. Das Vermahlen wird solange durchgeführt, bis die gewünschte Teilchengröße erreicht ist.

Die Konzentration an Carotinoid in der öligen Suspension wird in der Regel so gewählt, dass sie im Bereich von 0,1 bis 30 Gew.-%, häufig im Bereich von 0,2 bis 20 Gew.-%, insbesondere im Bereich von 0,5 bis 20 Gew.-% liegt. Dementsprechend wird man zum Vermahlen entsprechende Mengenverhältnisse an Öl und Carotinoid einsetzen.

Gegebenenfalls können im erfindungsgemäßen Verfahren übliche Mittel zur Stabilisierung von Carotinoid-Lösungen oder -Suspensionen wie lipophile Dispergiermittel, Antioxidantien (Oxidationsstabilisatoren) und dergleichen eingesetzt werden. Diese Mittel können bei der Bereitstellung der Suspension, beim Erhitzen der Suspension, z.B. über einen heißen Ölstrom, und/oder beim Abschrecken der der heißen Öllösung über die kühlere Carotinoid-Lösung zugeführt werden.

Beispiele für Antioxidantien sind Tocopherole wie α-Tocopherol, α-Tocopherolpalmitat, α-Tocopherolacetat, tert.Butylhydroxytoluol, tert.-Butylhydrochinon, tert.-Butylhydroxyanisol, Ascorbinsäure, ihre Salze und Ester, z.B. Natriumascorbat, Calciumascorbat, Ascorbylphosphatester, und Ethoxyquin. Die Antioxidantien werden, sofern erwünscht, typischerweise in Mengen von 0,001 bis 20 Gewichtsteile, bezogen auf 1 Gewichtsteil des Carotinoids eingesetzt. Im Falle von Tocopherolen kann die eingesetzte Menge an Stabilisator auch höher sein.

Typische lipophile Dispergiermittel sind Ascorbylpalmitat, Polyglycerin-Fettsäureester wie Polyglycerin-3-polyrizinoleat (PGPR90), Sorbitanfettsäureester wie Sorbitanmonostearat (SPAN60), PEG(20)-Sorbitolmonooleat, Propylenglycol-Fettsäureester sowie Phospholipide wie Lecithin. Lipophile Dispergiermittel werden, sofern erwünscht, üblicherweise in Mengen von 0,1 bis 10 Gew.-Teilen, bezogen auf 1 Gew.-Teil des Carotinoids eingesetzt. In einer bevorzugten Ausführungsform der Erfindung wird kein lipophiles Dispergiermittel eingesetzt.

Weiterhin können der Suspension Zuschlagsstoffe zugegeben werden, z.B. Basen wie Ammoniak, basische Aminosäuren oder basische Adsorbentien, um die Acidität des verwendeten Öls zu erniedrigen und damit eine weitere Erniedrigung des Isomerisierungsgrades zu erreichen, sowie inerte Zusätze wie unlösliche Sulfate der Erdalkalimetalle, die als harte Festkörper die Mahlung beschleunigen und in der Suspension verbleiben können, weil sie physiologisch unbedenklich sind. Insbesondere geeignet sind Alkalimetall- und Erdalkalimetallcarbonate, da sie als Festkörper die Mahlung beschleunigen, in der Suspension verbleiben können, weil sie physiologisch unbedenklich sind, und zudem zur Verminderung der Acidität der verwendeten Öle beitragen. In einer besonders bevorzugten Ausführungsform der Erfindung umfasst das zur Herstellung der Carotinoid-Suspensionen verwendete Öl zu wenigstens 50 Gew.-%, insbesondere zu wenigstens 80 Gew.-%, wenigstens ein Öl mit einem hohen Anteil, d.h. wenigstens 60 Gew.-% an C₈- bis C₁₄-Fettsäuren, insbesondere C₈- bis C₁₀-Fettsäuren, insbesondere wenigstens ein unter Palmkernöl und MCT-Ölen ausgewähltes essbares Öl.

Das zur Herstellung der Suspension eingesetzte essbare Öl ist üblicherweise unter den vorgenannten essbaren Ölen, insbesondere unter den als bevorzugt oder besonders bevorzugt genannten essbaren Ölen ausgewählt. Zur Herstellung der Suspension werden essbare Öle bevorzugt, die bei 30 °C flüssig sind.

Das zur Herstellung der Suspension eingesetzte Öl kann geringe Mengen an Antioxidantien enthalten. Die Antioxidantien können auch vor, während oder nach dem Mahlen der Suspension zugesetzt werden. Daneben kann das eingesetzte Öl auch geringe Mengen an Wasser enthalten, vorzugsweise jedoch nicht mehr als 10 Gew.-%, z.B. 0,1 bis 10 Gew.-%, häufig 0,5 bis 8 Gew.-%, bezogen auf das zur Herstellung der Suspension eingesetzte Öl. In einer speziellen Ausführungsform der Erfindung enthält das zur Herstellung der Suspension eingesetzte essbare Öl nicht mehr als 0,5 Gew.-% an Wasser.

In Schritt ii. des erfindungsgemäßen Verfahrens wird ein Strom der Suspension kontinuierlich in einem für Nahrungsmittel geeigneten Öl erhitzt. Der zu erhitzende Strom aus Carotinoid-Suspension und dem für Nahrungsmittel geeigneten Öl wird im Folgenden auch als Ölstrom bezeichnet. Die Temperaturen und die Dauer des Erhitzens werden so gewählt, dass man eine heiße Carotinoid-Lösung erhält. Die Temperatur und die Dauer des Erhitzens richten sich in an sich bekannter Weise nach der Art des Carotinoids, der gewünschten Konzentration des Carotinoids in der heißen Lösung und der Art des für Nahrungsmittel geeigneten Öls. Die erforderlichen Parameter kann der Fachmann durch übliche Routineverfahren ermitteln.

Das Erhitzen in Schritt ii. kann man beispielsweise so durchführen, dass man einen Strom des für Nahrungsmittel geeigneten Öls erhitzt, den so erhaltenen heißen Ölstrom mit der in Schritt i. bereitgestellten Suspension vermischt und so eine heiße Lösung der Carotinoids in dem für Nahrungsmittel geeigneten Öl erhält (Ausführungsform A). Alternativ kann man so vorgehen, dass man die Suspension direkt erhitzt und vor oder während dem Erhitzen der Suspension einen Ölstrom zuführt, der gegebenenfalls erwärmt sein kann (Ausführungsform B). Bei dem zugeführten Ölstrom handelt es sich ebenfalls um ein für Nahrungsmittel geeignetes Öl.

Das der Suspension in Schritt ii. gegebenenfalls zugeführte Öl ist ein für Nahrungsmittel geeignetes Öl, das üblicherweise unter den vorgenannten, für Nahrungsmittel geeigneten Ölen, insbesondere unter den als bevorzugt oder besonders bevorzugt genannten essbaren Ölen ausgewählt ist. Das zugeführte Öl kann geringe Mengen an Antioxidantien enthalten. In einer besonders bevorzugten Ausführungsform der Erfindung umfasst das in Schritt ii. zugeführte Öl zu wenigstens 50 Gew.-%, insbesondere zu wenigstens 80 Gew.-%, wenigstens ein Öl mit einem hohen Anteil, d.h. wenigstens 60 Gew.-% an C₈- bis C₁₄-Fettsäuren, insbesondere C₈- bis C₁₀-Fettsäuren, insbesondere wenigstens ein unter Palmkernöl und MCT-Ölen ausgewähltes essbares Öl.

Der Energieeintrag in den zu erhitzenden Ölstrom sowie die Verweilzeit des Carotinoids im erhitzten Zustand werden so gewählt, dass man vor dem Abschrecken in Schritt iii. eine heiße Carotinoid-Lösung erhält. Die in den Ölstrom eingetragene Energiemenge sowie die Verweilzeit richten sich in an sich bekannter Weise nach der Art des Carotinoids, der gewünschten Konzentration des Carotinoids in der heißen Lösung und der Art des für Nahrungsmittel geeigneten Öls. Die erforderlichen Parameter kann der Fachmann durch übliche Routineverfahren ermitteln.

Vorzugsweise wird soviel Energie in den Ölstrom eingetragen, dass die Temperatur der erhaltenen heißen Carotinoid-Lösung im Bereich von 50 bis 200 °C, insbesondere im Bereich von 100 bis 190 °C, besonders bevorzugt im Bereich von 120 bis 185°C und speziell im Bereich von 130 bis 180 °C liegt.

Vorzugsweise erfolgt das Erhitzen des Ölstroms möglichst rasch, so dass die mittlere Verweilzeit der heißen Carotinoid-Lösung in der zum Erhitzen verwendeten Vorrichtung bis zum Abschrecken möglichst kurz ist und eine Dauer von 30 Sekunden, insbesondere 20 Sekunden, bevorzugt 10 Sekunden und speziell 5 Sekunden nicht überschreitet. Typischerweise wird die mittlere Verweilzeit der heißen Carotinoid-Lösung bis zum Abschrecken 0,1 bis 30 Sekunden, insbesondere 0,1 bis 20 Sekunden, bevorzugt 0,1 bis 10 Sekunden und speziell 0,2 bis 5 Sekunden oder 0,5 bis 5 Sekunden betragen.

Die Konzentration des Carotinoids in der heißen Carotinoid-Lösung sollte vorzugsweise im Bereich von 0,2 bis 20 g/kg, häufig im Bereich von 0,5 bis 15 g/kg und insbesondere im Bereich von 1 bis 10 g/kg liegen. Die Konzentration in der heißen Carotinoid-Lösung kann über die Konzentration an Carotinoid in der Suspension und die Menge des gegebenenfalls zugeführten, für Nahrungsmittel geeigneten Öls eingestellt werden. Hierbei ist es möglich, vor oder während des Erhitzens die Suspension mit einem für Nahrungsmittel geeigneten Öl zu verdünnen, um die gewünschte Konzentration einzustellen oder eine entsprechend konzentrierte bzw. verdünnte Carotinoid-Suspension herzustellen.

Das Erhitzen des Ölstroms kann in üblicher Weise erfolgen, beispielsweise mittels eines Wärmetauschers, welcher beispielsweise mit elektrischer Energie oder heißem Dampf beheizt wird, durch den Wärmeeintrag einer dynamischen Mischvorrichtung wie beispielsweise ein Rotor-Stator-Mischer, durch den Energieeintrag eines Ultraschall-Mischers, durch Vermischen der Suspension mit einem heißen, für Nahrungsmittel geeigneten Öl sowie durch Einbringen von heißem Dampf oder heißer Gase wie heißem CO₂ sowie durch geeignete Kombinationen dieser Maßnahmen.

Erfindungsgemäß erfolgt das Erhitzen des Ölstroms kontinuierlich, wobei das Erhitzen in einer oder mehreren kontinuierlich betriebenen Stufe(n) erfolgen kann.

Gegebenenfalls ist es von Vorteil, die Carotinoid-Suspension vor dem eigentlichen Erhitzen auf eine Temperatur vorzuwärmen, bei der ein Lösen der Carotinoid-Partikel in der Ölphase der Suspension noch nicht stattfindet, z. B. auf Temperaturen bis 80 °C, insbesondere auf Temperaturen im Bereich von 40 bis 80 °C. Die Maximaltemperatur, bei der die Lösungsgeschwindigkeit der suspendierten Carotinoid-Partikel in der Ölphase ausreichend langsam ist, so dass ein Lösen nicht stattfindet, hängt naturgemäß vom eingesetzten Carotinoid, von der Größe der Carotinoid-Partikel sowie vom verwendeten Öl ab und kann vom Fachmann durch Routineexperimente ermittelt werden.

Typischerweise wird man zum Erhitzen die Carotinoid-Suspension, gegebenenfalls zusammen mit weiterem, für Nahrungsmittel geeignetem Öl, kontinuierlich in eine Heizzone überführen und dort auf die zum Lösen der Carotinoid-Partikel in der Ölphase erforderliche Temperatur erhitzen. Die Carotinoid-Suspension kann dabei kontinuierlich aus einem Vorratsgefäß in die Heizzone überführt werden oder nach Maßgabe ihres Verbrauchs in-situ frisch hergestellt werden, z. B. durch Vermahlen von festem Carotinoid in dem für Nahrungsmittel geeigneten Öl. Die Zufuhr der Carotinoid-Suspension in die Heizzone kann durch Ausnutzung von Druckunterschieden oder mittels einer Pumpe erfolgen.

Gemäß einer bevorzugten Ausführungsform erfolgt das Erhitzen in Schritt ii. des erfindungsgemäßen Verfahrens durch Vermischen der Carotinoid-Suspension mit einem heißen Ölstrom. Bei dem Ölstrom handelt es sich typischerweise um einen Strom aus einem oder mehreren für Nahrungsmittel geeigneten Ölen, die mit dem zur Herstellung der Suspension verwendeten Öl identisch oder davon verschieden sein können .

Das zum Erhitzen eingesetzte Öl ist üblicherweise unter den vorgenannten für Nahrungsmittel geeigneten Ölen, insbesondere unter den als bevorzugt oder besonders bevorzugt genannten essbaren Ölen ausgewählt. Das eingesetzte Öl kann geringe Mengen an Antioxidantien enthalten. Die Antioxidantien können auch vor, während oder nach dem Mahlen der Suspension zugesetzt werden. Daneben kann das eingesetzte Öl auch geringe Mengen an Wasser, vorzugsweise jedoch nicht mehr als 10 Gew.-%, z.B. 0,1 bis 10 Gew.-%, häufig 0,5 bis 8 Gew.-%, bezogen auf das zum Erhitzen eingesetzte Öl, enthalten. In einer speziellen Ausführungsform der Erfindung enthält das zum Erhitzen eingesetzte essbare Öl nicht mehr als 0,5 Gew.-% an Wasser.

Der heiße Ölstrom wird in der Regel eine Temperatur aufweisen, die oberhalb der Temperatur liegt, auf welche die Suspension erhitzt werden soll. Typischerweise liegt die Temperatur des heißen Ölstroms wenigstens 1 K, insbesondere wenigstens 5 K, z. B. 1 bis 100 K und insbesondere 5 bis 70 K oberhalb der Temperatur, auf welche die Carotinoid-Suspension zum Lösen des Carotinoids erhitzt werden soll. Typischerweise liegt die Temperatur des heißen Ölstroms wenigstens 40 K und insbesondere wenigstens 50 K, z. B. 40 bis 250 K und insbesondere 50 bis 200 K oberhalb derjenigen Temperatur, welche die Carotinoid-Suspension unmittelbar vor dem Vermischen mit dem heißen Ölstrom aufweist.

Das Volumenstromverhältnis, bzw. das Verhältnis der Flussraten, von dem Strom der zu erhitzenden Suspension zu dem heißen Ölstrom liegt typischerweise im Bereich von 1:1000 bis 2:1 und speziell im Bereich von 1:500 bis 1:1.

Das Vermischen des heißen Ölstroms mit der gegebenenfalls vorgewärmten Suspension erfolgt möglichst rasch unter Verwendung statischer oder dynamischer Mischer, die gegebenenfalls beheizt werden können und/oder zur Vermeidung von Wärmeverlusten wärmeisoliert sind. Gegebenenfalls können sich dieser Mischzone noch eine weitere Heizzone, die mittels eines Wärmetauschers beheizt wird, und/oder eine Verweilzeit-Zone anschließen, in der das Lösen der Carotinoid-Partikel vervollständigt wird. Dementsprechend umfasst in dieser Ausführungsform die Heizzone im Wesentlichen eine Mischzone, in der die Suspension und das heiße Öl miteinander vermischt werden, sowie gegebenenfalls eine weitere Heizzone, die mit einem Wärmeaustauscher oder in sonstiger Weise beheizt wird und/oder Verweilzeitzone (Haltezone), die vorzugsweise wärmeisoliert ist. Vorzugsweise umfasst die Heizzone in dieser Ausführungsform ausschließlich die Mischzone und gegebenenfalls die Verweilzeitzone.

In einer bevorzugten Ausführungsform der Erfindung erfolgt das Vermischen des heißen Ölstroms mit der gegebenenfalls vorgewärmten Suspension unter Verwendung einer Mischpumpe. Als Mischpumpen sind grundsätzlich alle für die Förderung von Flüssigkeit geeigneten Pumpen zu verstehen, die saugseitig zwei Anschlüsse für die zu mischenden Flüssigkeiten aufweisen. Beispiele für geeignete Mischpumpen sind insbesondere Pumpen mit rotierenden Fördermitteln wie Kreiselradpumpen, insbesondere als Peripheralpumpe bzw. Peripheralradpumpen ausgestaltete Kreiselpumpen, weiterhin Rotationspumpen wie Zahnrad- und Kreiskolbenpumpen, sowie Rotor-Stator-Mischer. In einer bevorzugten Ausführungsform der Erfindung erfolgt das Vermischen des heißen Ölstroms mit der Suspension unter Verwendung einer Peripheralpumpe, die auch als Reaktionsmischpumpe bezeichnet wird und beispielsweise unter der Bezeichnung "Reaktionsmischpumpe" kommerziell erhältlich sind, z.B. von der Fa. K-Engineering Mischtechnik und Maschinenbau, Westoverledingen DE.

Gemäß einer weiteren bevorzugten Ausführungsform der Erfindung umfasst das Erhitzen des Ölstroms in Schritt ii. das Eintragen von heißen Dampf in den zu erhitzenden Ölstrom. Hierzu wird heißer Dampf, insbesondere heißer Wasserdampf, direkt in die Mischung aus Carotinoid-Suspension und weiterem Öl oder in den zum Erhitzen der Carotinoid-Suspension verwendeten Ölstrom eingebracht. Durch das Eintragen von heißem Dampf und die damit einhergehende Kondensation des Dampfes in der Ölphase wird ein besonders rascher und gleichmäßiger Energieeintrag bewirkt, so dass sich gezielt die gewünschte Temperatur der Carotinoid-Suspension bzw. des Ölstroms einstellen lässt. Auf diese Weise werden Temperaturspitzen und eine damit einhergehende verstärkte Zersetzung des Öls und eine Zersetzung oder Isomerisierung des Carotinoids minimiert. Das Einbringen des heißen Dampfs in die Mischung aus Carotinoid-Suspension und weiterem Öl oder in den zum Erhitzen der Suspension verwendeten Ölstrom erfolgt in der Regel so, dass man den Dampf mit Überdruck, bezogen auf den Förderdruck der Suspension bzw. des Ölstroms, und vorzugsweise mit hoher Geschwindigkeit in die Mischung aus Carotinoid-Suspension und weiterem Öl bzw. den zum Erhitzen der Carotinoid-Suspension verwendeten Ölstrom einbringt. Durch das Einbringen des Dampfes und die Kondensationswärme des Dampfmediums erhitzt sich der jeweilige Ölstrom augenblicklich auf die zum Lösen erforderliche Temperatur.

Als Dampfmedium kommen grundsätzlich Alkohole, speziell Ethanol, Wasser oder deren Gemische in Betracht. Bevorzugt wird heißer Wasserdampf eingesetzt.

Unter einem heißen Dampf versteht man einen gesättigten Dampf oder einen überhitzten Dampf, der eine Temperatur aufweist, die gleich der Temperatur ist, auf die der Ölstrom erhitzt werden soll, oder darüber liegt. Typischerweise liegt die Temperatur des Dampfes im Bereich von 100 bis 200 °C und speziell im Bereich von 120 bis 180 °C. Die notwendigen Temperaturen und Drücke kann der Fachmann einschlägigen Standardwerken, z.B. dem VDI-Wärmeatlas, entnehmen. Bevorzugt verwendet man zum Erhitzen Sattdampf, um Temperaturspitzen zu vermeiden. Die benötigte Dampfmenge beträgt im Falle von Wasserdampf etwa 1 g pro Kelvin und kg des zu erhitzenden Ölstroms.

Der Förderdruck der Suspension bzw. des Ölstroms wird vorzugsweise so gewählt, dass er über dem Dampfdruck des Dampfmediums, im Falle von Wasserdampf oberhalb des Dampfdrucks von Wasser, bei der jeweiligen Temperatur des erhitzten Mediums liegt.

Die Menge und Temperatur des eingetragenen Dampfes bestimmen den Energieeintrag in den zu erhitzenden Ölstrom, so dass sich auf diese Weise gezielt die gewünschte Temperatur der Carotinoid-Suspension bzw. des Ölstroms einstellen lässt. Überraschenderweise führt der Einsatz von Dampf nicht zu einer nennenswerten Verminderung der Löslichkeit des Carotinoids in dem für Nahrungsmittel geeigneten Öl.

In einer bevorzugten Ausführungsform geht man so vor, dass man den heißen Dampf zum Erhitzen eines Ölstroms einsetzt und den so erhitzten Ölstrom zum Erhitzen der Carotinoid-Suspension nutzt. In der Regel speist man den heißen Dampf, insbesondere Wasserdampf, mit Überdruck, bezogen auf den Förderdruck des zu erhitzenden Ölstroms, über eine vorzugsweise einstellbare, insbesondere regelbare Düse in den zu erhitzenden Ölstrom ein. In einer bevorzugten Ausführungsform erfolgt das Einspeisen des heißen Dampfs über eine einstellbare, insbesondere regelbare Düse in eine röhreförmige Vorrichtung, durch welche der Ölstrom geleitet wird. Vorzugsweise erfolgt das Einspeisen des heißen Dampfes in Richtung der Längsachse der röhrenförmigen Vorrichtung. Die Zufuhr des Öls erfolgt in der Regel in einem spitzen Winkel von weniger als 90°, d. h. der Vektor der Fließrichtung der Ölstroms bildet mit dem Vektor der Richtung der Dampfeinspeisung einen Winkel von weniger als 90°. Die Düse, mit welcher der Dampf eingespeist wird, ist typischerweise einstellbar, insbesondere regelbar und weist üblicherweise eine konische Geometrie auf, die sich in Fließrichtung des Dampfes verjüngt. In dieser Düse ist eine Nadel oder ein auf einer in Längsrichtung verschiebbaren Stange angeordneter Kegel angeordnet. Nadel bzw. Kegel bilden mit dem Konus der Düse einen Spalt. Durch Verschieben der Nadel bzw. der Stange in Längsrichtung lässt sich die Größe des Spalts und damit die Querschnittsfläche der Düsenöffnung in einfacher Weise einstellen, wodurch man in einfacher Weise die Geschwindigkeit des Dampfeintrags regulieren kann.

Gemäß einer anderen Ausführungsform der Erfindung umfasst das Erhitzen in Schritt ii. das Eintragen von heißem Dampf, insbesondere heißem Wasserdampf, in eine mit einem für Nahrungsmittel geeigneten Öl verdünnte Suspension. Hierbei geht man so vor, dass man die Suspension zusammen mit einem gegebenenfalls erhitzten Ölstrom eines für Nahrungsmittel geeigneten Öls durch Anwendung von Druck oder mittels einer Pumpe in eine Mischzone einbringt, in die man den heißen Dampf, insbesondere heißen Wasserdampf, mit Überdruck, bezogen auf den Förderdruck der Mischung, über eine vorzugsweise einstellbare, insbesondere regelbare Düse einspeist. Das Vermischen der in Schritt i. bereitgestellten Suspension mit dem zugeführten Öl kann während oder vor dem Eintragen des Dampfs erfolgen. Durch das Einspeisen des heißen Dampfes mit Überdruck wird die Mischung, d.h. die durch das Öl verdünnte Suspension, nicht nur erhitzt, sondern es wird auch mechanische Energie in das System eingetragen, welche eine weitere Zerteilung der Carotinoid-Partikel fördert. Auf diese Weise wird ein besonders rascher und gleichmäßiger Energieeintrag bewirkt, so dass Temperaturspitzen und eine damit einhergehende verstärkte Zersetzung des Carotinoids minimiert wird. In einer bevorzugten Ausführungsform hat diese Mischzone eine röhrenförmige Geometrie. Vorzugsweise erfolgt das Einspeisen des heißen Dampfes in Richtung der Längsachse der röhrenförmigen Vorrichtung. Die Zufuhr der Suspension und des Ölstroms bzw. der Mischung aus Suspension und Ölstrom erfolgt in der Regel in einem spitzen Winkel von weniger als 90°, d. h. der Vektor der Fließrichtung der Suspension bildet mit dem Vektor der Richtung der Dampfeinspeisung einen Winkel von weniger als 90°. Die Düse, mit welcher der Dampf eingespeist wird, ist typischerweise einstellbar, insbesondere regelbar und weist üblicherweise eine konische Geometrie auf, die sich in Fließrichtung des Dampfes verjüngt. In dieser Düse ist eine Nadel oder ein auf einer in Längsrichtung verschiebbaren Stange angeordneter Kegel angeordnet. Nadel bzw. Kegel bilden mit dem Konus der Düse einen Spalt. Durch Verschieben der Nadel bzw. der Stange in Längsrichtung lässt sich die Größe des Spalts und damit die Querschnittsfläche der Düsenöffnung in einfacher Weise einstellen, wodurch man in einfacher Weise die Geschwindigkeit des Dampfeintrags regulieren kann.

Der Mischzone, in welche der heiße Dampf und die Mischung aus Carotinoid-Suspension und weiterem Öl eingespeist werden, kann sich gegebenenfalls eine weitere Heizzone anschließen, in welcher die Mischung weiter erhitzt wird. Beispielsweise ist es möglich, im Anschluss an das Erhitzen mit heißem Dampf heißes Öl, wie zuvor beschrieben, mit der durch heißen Dampf erhitzten Mischung zu vermischen, um auf diese Weise ein Lösen des Carotinoids zu fördern bzw. um die Lösung zu stabilisieren. Es ist ebenfalls denkbar, zunächst die Carotinoid-Suspension durch Vermischen mit einem heißen Ölstrom, wie zuvor beschrieben, zu erhitzen, und anschließend ein weiteres Erhitzen durch Eintragen von heißem Dampf vorzunehmen.

In Schritt iii. des erfindungsgemäßen Verfahrens wird die in Schritt ii. erhaltene, heiße Carotinoid-Lösung abgeschreckt, d. h. möglichst rasch abgekühlt, um eine Zersetzung und/oder Isomerisierung des Carotinoids in der heißen Carotinoid-Lösung zu minimieren. Das Abschrecken erfolgt erfindungsgemäß durch Vermischen der heißen Carotinoid-Lösung mit einem kühleren Ölstrom unter Verwendung einer Mischpumpe. Als Ölstrom wird eine kühlere Lösung des Carotinoids in dem für Nahrungsmittel geeigneten Öl verwendet.
Die Temperatur des kühleren Ölstroms wird in der Regel wenigstens 50 K, häufig wenigstens 80 K und insbesondere wenigstens 100 K unterhalb der Temperatur liegen, welche die heiße Carotinoid-Lösung nach Beendigung des Erhitzens, d. h. nach Verlassen der Heizzone, aufweist.

Typischerweise wird man die Menge und Temperatur des zum Abschrecken verwendeten kühleren Ölstroms so wählen, dass die Temperatur der durch Vermischen erhaltenen Carotinoid-Lösung nicht mehr als 80 °C, insbesondere nicht mehr als 70 °C und speziell nicht mehr als 60 °C beträgt und beispielsweise im Bereich von 10 bis 80 °C, insbesondere im Bereich von 15 bis 70 °C und speziell im Bereich von 20 bis 60 °C liegt. Typischerweise weist der zum Abschrecken verwendete kühlere Ölstrom eine Temperatur im Bereich von 10 bis 60 °C und insbesondere im Bereich von 20 bis 50 °C und speziell im Bereich von 20 bis 30 °C auf.

Das Volumenstromverhältnis bzw. das Verhältnis der Flussraten von heißer Carotinoid-Lösung zu der kühleren Carotinoid-Lösung liegt typischerweise im Bereich von 1 : 500 bis 1:1 und speziell im Bereich von 1 : 300 bis 1 : 2.
Für diesen Zweck geeignete Mischpumpen sind die zuvor im Zusammenhang mit dem Vermischen von Suspension und heißem Ölstrom genannten Mischpumpen, insbesondere Peripheralpumpen bzw. Reaktionsmischpumpen. Die Verwendung von Mischpumpen führt zu einer besonders raschen Abkühlung der heißen Carotinoid-Lösung, und ein Auskristallisieren des Carotinoids wird vollständig vermieden. Hierbei ist zu beachten, dass bereits geringe Mengen an nicht-gelöstem Carotinoid in der Produktlösung stören und sich auch nur äußerst langsam, wenn überhaupt, wieder lösen.
Bei dem zum Abschrecken verwendeten kühleren Ölstrom handelt es sich um eine Lösung des Carotinoids in einem für Nahrungsmittel geeigneten Öl, das gleich dem zur Herstellung der Suspension bzw. dem beim Erhitzen zugeführten Öl oder davon verschieden ist. Die Art des im kühleren Ölstrom enthaltenen Öls ist für die Erfindung von untergeordneter Bedeutung so dass es grundsätzlich aus allen der vorgenannten, für Nahrungsmittel geeigneten Ölen ausgewählt sein kann. Vorzugsweise ist es unter Sojabohnen-Öl, Palmöl, Palmkernöl, Sonnenblumenöl, Distelöl, Maiskeimöl, Olivenöl, Leinsamenöl, Rapsöl, Reisöl, Kokosöl, Erdnussöl, PUFA-Öle, MCT-Ölen, weiterhin Fischölen, Fischölblends sowie Mischungen dieser Öle ausgewählt, insbesondere unter einem Öl oder einer Ölmischung aus der folgenden Gruppe: Maisöl, Sonnenblumenöl, Sojabohnenöl, Fischöl, Leinsamenöl, Rapsöl, Reisöl, Kokosöl und Erdnussöl. Erfindungsgemäß handelt es sich bei dem kühleren Ölstrom um eine Lösung des Carotinoids in einem für Nahrungsmittel geeigneten Öl. Durch Verwendung einer Carotinoid-Lösung zum Abschrecken bzw. Verdünnen der heißen Carotinoid-Lösung kann eine übermäßige Verdünnung vermieden werden. Als Folge sind geringere Carotinoid-Konzentrationen in der heißen Carotinoid-Lösung notwendig, um die gewünschte Endkonzentration einzustellen. Dies hat zur Folge, dass die zum Auflösen des Carotinoids erforderlichen Temperaturen verringert werden können, so dass geringere Abbaureaktionen des Carotinoids in der heißen Lösung auftreten. Ein weiterer Vorteil besteht darin, dass die Gefahr eines vorzeitigen Auskristallisierens des Carotinoids aus dem Öl verringert wird. Sofern zum Erhitzen der Carotinoid-Suspension ein heißes Öl verwendet wird, kann die Temperatur des heißen Öls verringert werden. Dies hat den Vorteil, dass Zersetzungsreaktionen des Öls und eine damit einhergehende Belagsbildung an Apparateteilen (sog. Fouling), die insbesondere bei nicht-raffinierten Ölen eine große Rolle spielen, verringert werden können.

Die Konzentration an Carotinoid in der kühleren Carotinoid-Lösung liegt typischerweise im Bereich von 0,005 bis 5 g/kg, häufig im Bereich von 0,01 bis 3 g/kg, vorzugsweise im Bereich von 0,05 bis 2 g/kg und insbesondere im Bereich von 0,1 bis 1,5 g/kg.
Das Vermischen der heißen Carotinoid-Lösung mit dem kühleren Ölstrom kann in beliebiger Weise erfolgen, z. B. durch Eintragen der heißen Carotinoid-Lösung in einen großen Überschuss einer kühleren Lösung eines Carotinoids in einem für Nahrungsmittel geeigneten Öl oder vorzugsweise durch Einspeisen eines Volumenstroms der kühleren Carotinoid-Lösung in den Strom der heißen Carotinoid-Lösung.

Gegebenenfalls kann das Abschrecken der heißen Carotinoid-Lösung weitere Maßnahmen zum Abkühlen umfassen. Zu nennen sind beispielsweise Wärmetauscher, Flash-Verdampfung oder sonstige Maßnahmen welche vorzugsweise dem Vermischen der heißen Carotinoid-Lösung mit dem kühleren Ölstrom nachgeschaltet sind.

Die nach dem Abschrecken erhaltene Carotinoid-Lösung weist, je nach Löslichkeit des Carotinoids in dem verwendeten essbaren Öl, eine Carotinoid-Konzentration im Bereich von 0,01 bis 5 g/kg, häufig im Bereich von 0,02 bis 3 g/kg, insbesondere im Bereich von 0,05 bis 2 g/kg und insbesondere im Bereich von 0,1 bis 1,5 g/kg auf. Daneben kann die gemischte Carotinoid-Lösung übliche Stabilisatoren wie Antioxidationsmittel und dergleichen in den oben angegebenen Mengen enthalten. Typischerweise beträgt die Menge an Stabilisatoren 0,01 bis 20 g/kg der gemischten Carotinoid-Lösung.
Bei der zum Abschrecken der heißen Carotinoid-Lösung verwendeten kühleren Lösung des Carotinoids handelt es sich um eine Carotinoid-Lösung, die nach dem erfindungsgemäßen Verfahren hergestellt und gegebenenfalls mit einem für Nahrungsmittel geeigneten Öl verdünnt wurde. Eine solche kühlere Carotinoid-Lösung wird dadurch erhalten, dass man zumindest einen Teilstrom der in

Schritt iii. erhaltenen Carotinoid-Lösung oder die Gesamtmenge dieser Lösung in ein für Nahrungsmittel geeignetes Öl oder in eine Lösung des Carotinoids in einem für Nahrungsmittel geeigneten Öl zurückführt.

Gemäß einer ersten bevorzugten Ausführungsform führt man die Gesamtmenge der abgeschreckten Carotinoid-Lösung, gegebenenfalls nach weiterer Abkühlung dieser Lösung, in ein für Nahrungsmittel geeignetes Öl zurück. Auf diese Weise erhält man eine verdünnte kühlere Lösung des Carotinoids. Beispielsweise kann man so vorgehen, dass man die nach dem Abkühlen erhaltene Carotinoid-Lösung in ein Vorratsgefäß fährt, das ein für Nahrungsmittel geeignetes Öl enthält. Nach einer kurzen Initialphase erreicht man in dieser Lösung eine für das erfindungsgemäße Verfahren geeignete Carotinoid-Konzentration, wie oben angegeben, und kann dann die so erhaltene Lösung zum Abschrecken der heißen Carotinoid-Lösung einsetzen. Im Verlauf der weiteren Durchführung des erfindungsgemäßen Verfahrens steigt die Carotinoid-Konzentration in der Carotinoidlösung im Vorratsgefäß weiter an. Wenn die gewünschte Konzentration erreicht ist, kann man eine Teilmenge oder die Gesamtmenge der Lösung austragen und durch frisches Öl ersetzen. Man kann aber auch kontinuierlich oder portionsweise die Carotinoid-Lösung ausschleusen und nach Maßgabe ihrer Entnahme durch frisches Öl ersetzen.

Gemäß einer zweiten bevorzugten Ausführungsform führt man einen Teilstrom der gemischten Carotinoid-Lösung, gegebenenfalls nach weiterer Abkühlung der gemischten Lösung, in ein für Nahrungsmittel geeignetes Öl zurück. Der zurückgeführte Teilstrom macht in der Regel 50 bis 99,7 Vol-%, insbesondere 60 bis 99,5 Vol.-%, bezogen auf das Gesamtvolumen der Schritt iii. erhaltenen gemischten Carotinoid-Lösung aus. Beispielsweise kann man so vorgehen, dass man den Teilstrom nach Maßgabe der benötigten Menge an kühlerer Lösung des Carotinoids mit frischem, essbarem Öl vermischt und die so erhaltene Lösung des Carotinoids zum Abschrecken verwendet. Man kann auch so vorgehen, dass man den zurückgeführten Teilstrom in ein Vorratsgefäß fährt, das ein für Nahrungsmittel geeignetes Öl enthält, und aus dem Vorratsgefäß die zum Abschrecken der heißen Carotinoid-Lösung benötigte kühlere Lösung des Carotinoids entnimmt. Durch die Rückführung des Teilstroms in das Vorratsgefäß erhält man eine verdünnte Lösung des Carotinoids in dem für Nahrungsmittel geeigneten Öl, deren Konzentration zunächst ansteigt. Wenn die gewünschte Konzentration erreicht ist, d. h. diejenige Konzentration, welche die zum Abschrecken verwendete kühlere Carotinoid-Lösung idealerweise aufweist, wird man in der Regel die Konzentration durch Zufuhr von frischem Öl konstant halten. Bevorzugte Konzentrationen an Carotinoid liegen im Bereich von 0,005 bis 2 g/kg und insbesondere im Bereich von 0,01 bis 1,5 g/kg.

Gegebenenfalls kann der zurückgeführte Teil- oder Gesamtstrom vor dem Vermischen mit dem für Nahrungsmittel geeigneten Öl oder mit der Lösung des Carotinoids in dem für Nahrungsmittel geeigneten Öl gekühlt werden, um einen Temperaturanstieg der Carotinoid-Lösung im Vorratsgefäß zu vermeiden.

Es versteht sich von selbst, dass die zur Durchführung des erfindungsgemäßen Verfahrens verwendete Vorrichtung übliche Maßnahmen zur Kontrolle und Steuerung bzw. Regelung der Volumenströme und Mittel zur Kontrolle und Steuerung bzw. Regelung der Temperaturen aufweist. Ebenso können Mittel zur Kontrolle der Konzentrationen an Carotinoid in der Suspension, in der heißen Lösung, in der kühleren Lösung und im Produktstrom vorgesehen werden.

Durch das erfindungsgemäße Verfahren erhält man stabile Lösungen von Carotinoiden in essbaren Ölen. Diese Lösungen zeichnen sich dadurch aus, dass das in ihnen enthaltene Carotinoid einen hohen Anteil an all-trans-Isomeren aufweist, der in der Regel oberhalb 70 %, insbesondere oberhalb 80 % und speziell oberhalb 90 % liegt. Derartige Carotinoid-Lösungen lassen sich nach dem Stand der Technik nur mit sehr viel größerem Aufwand herstellen. Zudem lassen sich Öl-Lösungen von Carotinoiden mit derartig hohen Anteilen an all-trans-Isomeren mit dem erfindungsgemäßen Verfahren in technischem Maßstab sehr viel zuverlässiger erzielen als mit den Verfahren des Standes der Technik.

Die nach dem erfindungsgemäßen Verfahren erhältlichen Carotinoid-Lösungen sind lagerstabil und können vor ihrer weiteren Verwendung über längere Zeiträume aufbewahrt werden, ohne dass es in nennenswerten Umfang zu einem Aktivitätsverlust, z.B. durch Isomerisierung und/oder oxidativen Abbau kommt. Insbesondere zeichnen sie sich durch einen hohen Anteil an all-trans-Isomeren des eingesetzten Carotinoids aus und durch einen vergleichsweise geringen Anteil an Carotinoid-Abbauprodukten.

Das erfindungsgemäße Verfahren kann direkt in die Prozesse zur Weiterverarbeitung der Carotinoid-Lösungen integriert werden.

Die nach dem erfindungsgemäßen Verfahren erhältlichen Carotinoid-Lösungen eignen sich in vorteilhafter Weise als Zusatz zu Tierfuttermitteln, Nahrungsmitteln für die Humanernährung, Nahrungsergänzungsmitteln, pharmazeutischen Mitteln oder kosmetischen Mitteln. Bevorzugt lassen sich die öligen Zubereitungen bzw. Lösungen als Futtermittelzusatz in der Tierernährung einsetzen, beispielsweise bei der Futtermittelherstellung durch Einmischen in einen Futtermittelteig vor oder während der Extrusion oder durch Auftragen bzw. Aufsprühen auf Futtermittelpellets. Die Anwendung als Futtermittelzusatz erfolgt insbesondere durch direktes Aufsprühen der erfindungsgemäßen Formulierungen, beispielsweise als sogenannte "post-pelleting liquid application". Vorzugsweise belädt man die Futtermittelpellets mit den Formulierungen unter vermindertem Druck.

Dementsprechend betrifft die vorliegende Erfindung auch die Herstellung von Futtermitteln, wie Tierfuttermittel, Nahrungsmittel für die Humanernährung, Nahrungsergänzungsmittel, sowie die Herstellung pharmazeutischer Mittel oder kosmetischer Mittel unter Verwendung der erfindungsgemäß hergestellten Carotinoid-Lösungen. Diese Mittel enthalten neben den für diese Mittel üblichen Bestandteilen das wenigstens eine essbare Öl und ein Carotinoid, insbesondere Astaxanthin.

Bevorzugte Ausführungsformen betreffen Tierfuttermittel insbesondere Fischfuttermittel, die das Öl und das Carotinoid, insbesondere Astaxanthin, umfassen. Derartige Mittel enthalten das in der öligen Zubereitung enthaltene Carotinoid typischerweise in einer Menge von 10 bis 100 ppm, bezogen auf das Gesamtgewicht des Mittels, wobei das Carotinoid in der Regel zu mehr als 70 %, insbesondere zu wenigstens 80 % und speziell zu wenigstens 90 % eine all-trans-Konfiguration aufweist.

Typische Bestandteile in Futtermitteln sind Kohlehydrat-Quellen, insbesondere Getreidemehle wie Weizen- oder Maismehl, Sojabohnenmehl, aber auch Zucker und Zuckeralkohole, weiterhin proteinhaltige Bestandteile wie Sojakonzentrat, Fischmehl, Glutene wie Mais- oder Weizengluten, Öle und Fette, z.B. die zuvor genannten essbaren Öle, aber auch andere essbare Fette pflanzlichen oder tierischen Ursprungs, weiterhin Nutrazeutika wie freie Aminosäuren, deren Salze, Vitamine und Spurenelemente, sowie gegebenenfalls Verarbeitungshilfsmittel, z.B. Gleitmittel, Antiblockmittel, inerte Füllstoffe und dergleichen, und gegebenenfalls Konservierungsmittel. Typische Fischfutterzusammensetzungen enthalten z.B. Getreidemehl in einer Menge von beispielsweise 3 bis 20 Gew.-%, Gluten, z.B. in einer Menge von 1 bis 30 Gew.-%, ein oder mehrere Proteinquellen, z.B. Sojakonzentrat und/oder Fischmehl, z.B. in einer Gesamtmenge von 10 bis 50 Gew.-%, Fette und/oder Öle in einer Menge von beispielsweise 10 bis 50 Gew.-%, gegebenenfalls ein oder mehrere Vitamine in einer Gesamtmenge von beispielsweise 0,1 bis 2 Gew.-% und gegebenenfalls Aminosäuren in einer Menge von beispielsweise 0,1 bis 5 Gew.-%, jeweils bezogen auf die Gesamtmenge der Futtermittelbestandteile.

Eine spezielle Ausführungsform dieser Mittel betrifft Futtermittelpellets, speziell Futtermittelpellets für Fischfutter, die mit der erfindungsgemäß erhältlichen Lösung des Carotinoids, insbesondere mit einer Lösung des Astaxanthins beladen sind. Derartige Pellets enthaltend das in der Lösung enthaltene Carotinoid, speziell Astaxanthin typischerweise in einer Menge von 10 bis 100 ppm, bezogen auf das Gesamtgewicht des Futtermittels. Die Herstellung solcher Pellets erfolgt in der Regel durch Besprühen konventioneller Pellets mit einer erfindungsgemäßen öligen Zusammensetzung, vorzugsweise unter vermindertem Druck, wobei das Besprühen kontinuierlich oder vorzugsweise diskontinuierlich erfolgen kann. Beispielsweise kann man die konventionellen Pellets in einem geeigneten Gefäß vorlegen, das Gefäß evakuieren und dann Öl unter Durchmischen der Pellets aufsprühen und anschließend belüften. Auf diese Weise erreicht man ein gleichmäßiges Eindringen der erfindungsgemäßen öligen Zusammensetzung in die Pellets. Gegebenfalls kann man erneut Vakuum anlegen und erneut eine erfindungsgemäße ölige Zusammensetzung oder ein essbares Öl in der zuvor beschriebenen Weise aufsprühen. Auf diese Weise erhält man Pellets, die im Kern das Öl enthalten.

Das erfindungsgemäße Verfahren wird im Folgenden anhand von Figuren und Beispielen näher erläutert.

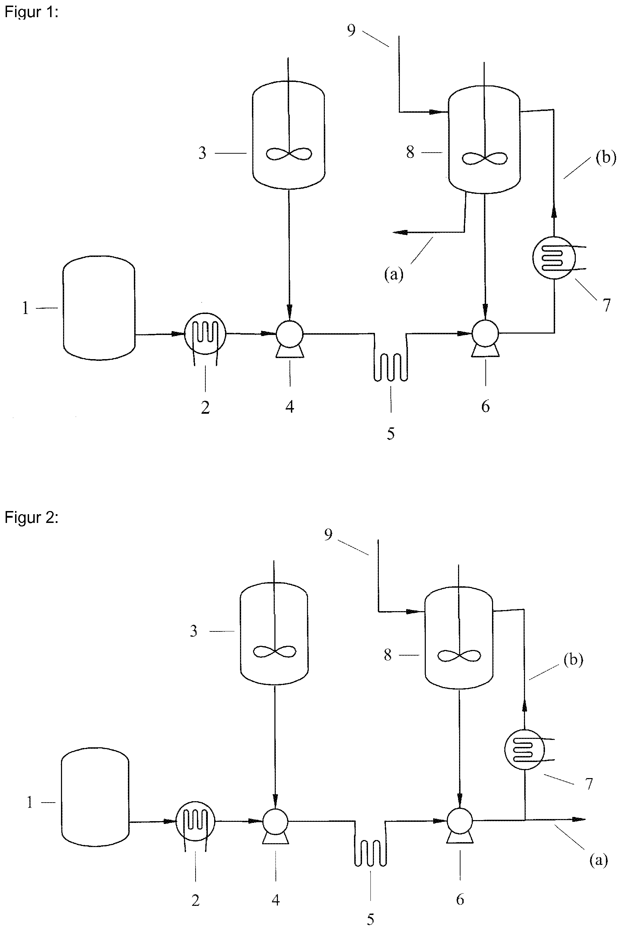

Die Bezugszeichen in den Figuren 1 und 2 haben folgende Bedeutungen:
(1) Vorlagenbehälter für essbares Öl
(2) Wärmetauscher
(3) Vorlagenbehälter für Carotinoid-Suspension
(4) Mischpumpe
(5) Verweilzeitstrecke
(6) Mischpumpe
(7) Wärmetauscher
(8) Vorlagenbehälter für kühlere Carotinoidlösung
(9) Zuleitung für frisches Öl
   (a) Produktentnahme
   (b) zurückgeführter (Teil-)Strom

Figur 1 zeigt schematisch eine bevorzugte Ausführungsform der Erfindung, bei der das Erhitzen in Schritt ii. mittels eines heißen Ölstroms vorgenommen wird und die zum Quenchen verwendete kühlere Carotinoid-Lösung durch Rückführen der gemischten Carotinoid-Lösung in ein Vorratsgefäß, das mit einem für Nahrungsmittel geeigneten Öl befüllt ist, hergestellt wird.

Gemäß dem in Figur 1 dargestellten Verfahren wird essbares Öl aus dem Vorlagenbehälter (1) in den Wärmetauscher (2) geleitet und dort auf die zum Erhitzen erforderliche Temperatur erhitzt, insbesondere auf Temperaturen im Bereich von 130 bis 200 °C. Das heiße Öl wird in der Mischpumpe (4) mit der Carotinoid-Suspension aus dem Vorlagenbehälter (3), welcher Mittel zum Bewegen der Suspension wie Rührer, etc. aufweist, vermischt und in die Verweilzeitstrecke (5) geleitet. Das Volumenverhältnis von heißem Öl zu Suspension wird vorzugsweise im Bereich von 1000 : 1 bis 1 : 2 und insbesondere im Bereich von 500 : 1 bis 1 : 1 liegen.

Der die Mischpumpe (4) verlassende heiße Carotinoid-Strom wird in die gegebenenfalls beheizte und/oder wärmeisolierte Verweilzeitstrecke (5) geleitet, wobei es zu einer vollständigen Lösung des Carotinoids in dem essbaren Öl kommt. Die Carotinoid-Konzentration in der heißen Lösung liegt vorzugsweise im Bereich von 1 bis 10 g/kg. Die Temperatur der heißen Carotinoid-Lösung nach Verlassen der Mischpumpe (4) liegt vorzugsweise im Bereich von 100 bis 180 °C und insbesondere im Bereich von 120 bis 160 °C.

Von dort wird die heiße Carotinoid-Lösung in die Mischpumpe (6) geleitet und mit der kühleren Carotinoid-Lösung zum Produktstrom (b) vermischt. Die Carotinoid-Konzentration in der kühleren Lösung liegt vorzugsweise im Bereich von 0,01 bis 2 g/kg. Die Temperatur der kühleren Carotinoid-Lösung nach Verlassen der Mischpumpe (6) liegt vorzugsweise im Bereich von 20 bis 50 °C und insbesondere im Bereich von 20 bis 30 °C. Das Volumenverhältnis von heißer Lösung zu kühlerer Lösung liegt vorzugsweise im Bereich von 1 : 2 bis 1 : 300.

Der Produktstrom (b) wird über den Wärmetauscher (7) gekühlt und in den Vorlagenbehälter (8) überführt. Gegebenenfalls wird dem Vorlagenbehälter (8) über die Zuleitung (9) frisches Öl zugeführt, um die Konzentration an Carotinoid in dem Vorratsgefäß (8) einzustellen. Über die Leitung (a) kann kontinuierlich oder nach Bedarf das Produkt entnommen werden.

Figur 2 zeigt schematisch eine bevorzugte Ausführungsform der Erfindung, bei der das Erhitzen in Schritt ii. mittels eines heißen Ölstroms vorgenommen wird und die zum Quenchen verwendete kühlere Carotinoid-Lösung durch Rückführen eines Teilstroms der gemischten Carotinoid-Lösung in ein Vorratsgefäß, das mit einem für Nahrungsmittel geeigneten Öl befüllt ist, hergestellt wird.

Die Durchführung des in Figur 2 gezeigten Verfahrens entspricht dem in Figur 1 gezeigten Verfahren mit folgenden Abweichungen. Aus dem die Mischpumpe (6) verlassenden Volumenstrom der gemischten Carotinoid-Lösung wird der Teilstrom (b) abgezweigt. Der Anteil des Teilstroms (b) liegt bei etwa 50 bis 99,7 Vol.-%, bezogen auf den Volumenstrom (a). Der verbleibende Reststrom (a) (Produktstrom etwa 0,3 bis 50 % des gesamten Volumenstroms (a)+(b)) wird in ein Vorratsgefäß (nicht gezeigt) geleitet oder direkt der Weiterverarbeitung, beispielsweise zu einem Futtermittel, zugeführt.

Der Teilstrom (b) wird über den Wärmetauscher (7) gekühlt und in den Vorlagenbehälter (8) überführt. Gegebenenfalls wird dem Vorlagenbehälter (8) über die Zuleitung (9) frisches Öl zugeführt, um die Konzentration an Carotinoid im Vorlagenbehälter (8) einzustellen.

## Patentansprüche

1. Verfahren zur Herstellung von Carotinoid-Lösungen in einem für Nahrungsmittel geeigneten Öl, umfassend:
i. Bereitstellung einer Suspension des Carotinoids in dem Öl,
ii. kontinuierliches Erhitzen eines Stroms der Suspension in einem für Nahrungsmittel geeigneten Öl, wobei man eine heiße Carotinoid-Lösung erhält, und
iii. Abschrecken der heißen Carotinoid-Lösung, umfassend das Vermischen der heißen Carotinoid-Lösung mit einer kühleren Lösung des Carotinoids in dem für Nahrungsmittel geeigneten Öl in einer Mischpumpe.
wobei man die kühlere Lösung des Carotinoids erhält, indem man wenigstens einen Teilstrom der in Schritt iii. erhaltenen Carotinoid-Lösung in ein für Nahrungsmittel geeignetes Öl oder in eine Lösung des Carotinoids in einem für Nahrungsmittel geeigneten Öl zurückführt.

2. Verfahren nach Anspruch 1, wobei die Temperatur der kühleren Lösung wenigstens 50 K unterhalb der Temperatur der heißen Carotinoid-Lösung liegt.

3. Verfahren nach einem der vorhergehenden Ansprüche, wobei die Temperatur der heißen Carotinoid-Lösung im Bereich von 50 bis 200°C liegt.

4. Verfahren nach einem der vorhergehenden Ansprüche, wobei die mittlere Verweilzeit der heißen Carotinoid-Lösung bis zum Beginn des Abschreckens nicht mehr als 30 sec. beträgt.

5. Verfahren nach einem der vorhergehenden Ansprüche, wobei die in Schritt iii. erhaltene Carotinoid-Lösung nach dem Abschrecken eine Temperatur von nicht mehr als 80 °C aufweist.

6. Verfahren nach einem der vorhergehenden Ansprüche, wobei das Verhältnis der Volumenströme von heißer Carotinoid-Lösung zu der kühleren Carotinoid-Lösung im Bereich von 1 : 500 bis 1:1 liegt.

7. Verfahren nach einem der vorhergehenden Ansprüche, wobei das Erhitzen in Schritt ii. ein kontinuierliches Vermischen der Suspension mit einem heißen Ölstrom eines für Nahrungsmittel geeigneten Öls umfasst.

8. Verfahren nach Anspruch 7, wobei das Volumenstromverhältnis von dem Suspensionsstrom zu der heißen Carotinoid-Lösung im Bereich von 1:1000 bis 2:1 liegt.

9. Verfahren nach einem der vorhergehenden Ansprüche, wobei die in Schritt i. eingesetzte Suspension 0,1 bis 30 Gew.-% des Carotinoids, bezogen das Gesamtgewicht der Suspension, enthält.

10. Verfahren nach einem der vorhergehenden Ansprüche, wobei die Konzentration des Carotinoids in der heißen Carotinoid-Lösung im Bereich von 0,1 bis 20 g/kg liegt.

11. Verfahren nach einem der vorhergehenden Ansprüche, wobei die Konzentration des Carotinoids in der in Schritt iii. erhaltenen Carotinoid-Lösung im Bereich von 0,01 bis 5 g/kg liegt.

12. Verfahren nach einem der vorhergehenden Ansprüche, wobei das in den Schritten i., ii. und iii. eingesetzte Öl ausgewählt ist unter Sojabohnen-Öl, Palmöl, Palmkernöl, Sonnenblumenöl, PUFA-Ölen, MCT-Ölen, Fischölen, Distelöl, Maisöl, Olivenöl, Leinsamenöl, Rapsöl, Reisöl und Mischungen dieser Öle.

13. Verfahren nach einem der vorhergehenden Ansprüche, wobei das Carotinoid Astaxanthin ist.

## Claims

1. A method for preparing carotenoid solutions in an oil suitable for foodstuffs, comprising:
i. provision of a suspension of the carotenoid in the oil,
ii. continuous heating of a stream of the suspension in an oil suitable for foodstuffs, resulting in a hot carotenoid solution, and
iii. quenching of the hot carotenoid solution, comprising the mixing of the hot carotenoid solution with a cooler solution of the carotenoid in the oil suitable for foodstuffs in a mixing pump,
where the cooler solution of the carotenoid is obtained by at least a branch current of the carotenoid solution obtained in step iii. being fed back into an oil suitable for foodstuffs or into a solution of the carotenoid in an oil suitable for foodstuffs.

2. The method according to claim 1, where the temperature of the cooler solution is at least 50 K below the temperature of the hot carotenoid solution.

3. The method according to either of the preceding claims, where the temperature of the hot carotenoid solution is in the range from 50 to 200°C.

4. The method according to any of the preceding claims, where the average residence time of the hot carotenoid solution until the start of quenching is not more than 30 sec.

5. The method according to any of the preceding claims, where the carotenoid solution obtained in step iii. has a temperature after quenching of not more than 80°C.

6. The method according to any of the preceding claims, where the ratio of the volumetric flows of hot carotenoid solution to the cooler carotenoid solution is in the range from 1:500 to 1:1.

7. The method according to any of the preceding claims, where the heating in step ii. comprises a continuous mixing of the suspension with a hot carotenoid of an oil suitable for foodstuffs.

8. The method according to claim 7, where the volumetric flow ratio of the suspension stream to the hot carotenoid solution is in the range from 1:1000 to 2:1.

9. The method according to any of the preceding claims, where the suspension employed in step i. comprises from 0.1 to 30% by weight of the carotenoid based on the total weight of the suspension.

10. The method according to any of the preceding claims, where the concentration of the carotenoid in the hot carotenoid solution is in the range from 0.1 to 20 g/kg.

11. The method according to any of the preceding claims, where the concentration of the carotenoid in the carotenoid solution obtained in step iii. is in the range from 0.01 to 5 g/kg.

12. The method according to any of the preceding claims, where the oil employed in steps i., ii. and iii. is selected from soybean oil, palm oil, palm kernel oil, sunflower oil, PUFA oils, MCT oils, fish oils, safflower oil, corn oil, olive oil, linseed oil, rapeseed oil, rice oil and mixtures of these oils.

13. The method according to any of the preceding claims, where the carotenoid is astaxanthin.

## Revendications

1. Procédé pour la préparation de solutions de caroténoïde dans une huile appropriée pour un aliment, comprenant :
i. la préparation d'une suspension du caroténoïde dans l'huile,
ii. le chauffage continu d'un flux de la suspension dans une huile appropriée pour un aliment, une solution chaude de caroténoïde étant obtenue, et
iii. le refroidissement brusque de la solution chaude de caroténoïde, comprenant le mélange de la solution chaude de caroténoïde avec une solution plus froide du caroténoïde dans une huile appropriée pour un aliment dans une pompe de mélange
la solution plus froide de caroténoïde étant obtenue en ce qu'on recycle au moins un flux partiel de la solution de caroténoïde obtenue dans l'étape iii. dans une huile appropriée pour un aliment ou dans une solution du caroténoïde dans une huile appropriée pour un aliment.

2. Procédé selon la revendication 1, la température de la solution plus froide se situant au moins 50 K sous la température de la solution chaude de caroténoïde.

3. Procédé selon l'une quelconque des revendications précédentes, la température de la solution chaude de caroténoïde se situant dans la plage de 50 à 200°C.

4. Procédé selon l'une quelconque des revendications précédentes, le temps de séjour moyen de la solution chaude de caroténoïde jusqu'au début du refroidissement brusque n'étant pas supérieur à 30 secondes.

5. Procédé selon l'une quelconque des revendications précédentes, la solution de caroténoïde obtenue dans l'étape iii. présentant une température qui n'est pas supérieure à 80°C après le refroidissement brusque.

6. Procédé selon l'une quelconque des revendications précédentes, le rapport des flux volumiques de la solution chaude de caroténoïde à la solution plus froide de caroténoïde se situant dans la plage de 1:500 à 1:1.

7. Procédé selon l'une quelconque des revendications précédentes, le chauffage dans l'étape ii. comprenant un mélange continu de la suspension avec un flux chaud d'une huile appropriée pour un aliment.

8. Procédé selon la revendication 7, le rapport des flux volumiques du flux de suspension à la solution chaude de caroténoïde se situant dans la plage de 1:1000 à 2:1.

9. Procédé selon l'une quelconque des revendications précédentes, la suspension utilisée dans l'étape i. contenant 0,1 à 30% en poids du caroténoïde, par rapport au poids total de la suspension.

10. Procédé selon l'une quelconque des revendications précédentes, la concentration en caroténoïde dans la solution chaude de caroténoïde se situant dans la plage de 0,1 à 20 g/kg.

11. Procédé selon l'une quelconque des revendications précédentes, la concentration en caroténoïde dans la solution de caroténoïde obtenue dans l'étape iii. se situant dans la plage de 0,01 à 5 g/kg.

12. Procédé selon l'une quelconque des revendications précédentes, l'huile utilisée dans les étapes i., ii. et iii. étant choisie parmi l'huile de germes de soja, l'huile de palme, l'huile de palmiste, l'huile de tournesol, les huiles PUFA (acides gras polyinsaturés), les huiles MTC (triglycérides à chaîne moyenne), les huiles de poisson, l'huile de carthame, l'huile de maïs, l'huile d'olive, l'huile de graines de lin, l'huile de colza, l'huile de riz et les mélanges de ces huiles.

13. si Procédé selon l'une quelconque des revendications précédentes, le caroténoïde étant l'astaxanthine.
